# EUROPÄISCHE PATENTSCHRIFT

(11) **EP 2 394 400 B1**
(45) Veröffentlichungstag und Bekanntmachung des Hinweises auf die Patenterteilung: **18.07.2018**
(21) Anmeldenummer: 10702866.4
(22) Anmeldetag: 03.02.2010
(51) Int. Cl.: H04L 12/413, H04L 12/40, G01R 31/3193, G06F 11/267, H04L 12/26

(54) **KONFIGURIERBARE STATUSVERARBEITUNGSEINHEIT FÜR SENSOR-AKTOR-SYSTEME**
CONFIGURABLE STATUS PROCESSING UNIT FOR SENSOR-ACTUATOR SYSTEMS
UNITÉ DE TRAITEMENT D'ÉTAT CONFIGURABLE POUR SYSTÈMES DE CAPTEURS/ACTIONNEURS

(30) Priorität: 03.02.2009 DE 102009007200
(43) Veröffentlichungstag der Anmeldung: 14.12.2011
(73) Patentinhaber: Continental Teves AG & Co. OHG, 60488 Frankfurt (DE)
(72) Erfinder: PEICHL, Thomas, 61206 Wöllstadt (DE); SCHERSCHMIDT, Jürgen, 60322 Frankfurt (DE); SCHRIEFER, Jörn, 64347 Griesheim (DE)
(86) Internationale Anmeldenummer: PCT/EP2010/051323
(87) Internationale Veröffentlichungsnummer: WO 2010/089332

(56) Entgegenhaltungen:
- WO-A1-2007/077189
- WO-A2-02/096707
- US-A1- 2009 019 146

## Beschreibung

Die Erfindung betrifft eine elektronische Kommunikationseinheit gemäß Oberbegriff von Anspruch 1, ein Verfahren zur Übertragung von Statusinformationen gemäß Oberbegriff von Anspruch 7 sowie die Verwendung der Kommunikationseinheit in Kraftfahrzeugen.

US 2009/019146 A1 zeigt ein Profibus-System mit einem I/O-Modul, welches Eingangsdaten verarbeitet. Das I/O-Modul speichert dabei den gemessenen Wert und einen Statuswert. Zudem ist die Verwendung einer Statusmaske vorgesehen.

WO 2007/077189 A1 zeigt das Erzeugen einer endlichen Zustandsmaschine aus einer Gerätebeschreibung, die als Basis für ein Testscript dient. Beim Ausführen des Testscrips werden Daten an die Gerätebeschreibung gesendet, wobei ein Soll-/Istwertvergleich durchgeführt wird.

Die Erfindung hat sich die Aufgabe gestellt eine elektronische Kommunikationseinheit sowie ein Verfahren zur Übertragung von Statusinformationen vorzuschlagen, welche/s nur eine relativ geringe Bandbreite benötigt bzw. welche/s besonders effektiv arbeitet.

Diese Aufgabe wird erfindungsgemäß gelöst durch die Kommunikationseinheit gemäß Anspruch 1 sowie durch das Verfahren gemäß Anspruch 7.

Die Maskierungsspeichereinheit umfasst vorzugsweise eine Logikschaltung bzw. eine Selektionsschaltung, mit welcher das eingangsseitige Statusdatum mit der in der Maskierungsspeichereinheit hinterlegten Bit-Maske verknüpft werden, wodurch das Selektiv-Statusdatum erzeugt wird. Diese Logikschaltung bzw. Selektionsschaltung umfasst insbesondere eine UND-Logik-Schaltung, welche besonders bevorzugt so ausgelegt ist, dass jedes Bit des Statusdatums mit jeweils einem Bit der Bit-Maske UND-verknüpft werden.

Das erste Statusinformationsverarbeitungsmodul weist vorzugsweise zusätzlich eine mit dem Statusverarbeitungselement verbundene Kurzstatusspeichereinheit auf, in welche das Kurzstatusdatum geschrieben wird.

Die Kommunikationseinheit umfasst bevorzugt eine Schnittstelleneinheit, welche mit dem Ausgang des Statusverarbeitungselements oder mit dem Ausgang der Kurzstatusspeichereinheit des ersten Statusinformationsverarbeitungsmoduls verbunden ist und an die Maskierungsspeichereinheit des ersten Statusinformationsverarbeitungsmoduls so angeschlossen ist, dass sie die in der Maskierungsspeichereinheit hinterlegte Bit-Maske ändern und/oder überschreiben kann, wodurch die Auswahl der Statusarten, über welche der Schnittstelleneinheit Informationen in Form der Kurzstatusdaten bereitgestellt werden, angepasst werden können.

Die Kurzstatusspeichereinheit ist alternativ vorzugsweise in die Schnittstelleneinheit integriert.

Es ist bevorzugt, dass die Schnittstelleneinheit außerdem so an die Statusspeichereinheit zumindest des ersten Statusinformationsverarbeitungsmoduls angeschlossen und so ausgelegt ist, dass sie in diese Statusspeichereinheit schreiben kann, wodurch ein Teststatusdatum in die Statusspeichereinheit geschrieben werden kann. Dafür weist die Schnittstelleneinheit insbesondere eine Testeinheit auf, welche so ausgebildet ist, dass sie selbstständig Testdaten bereitstellt oder Testdaten weiterleitet und/oder verarbeitet, besonders bevorzugt Testdaten, die von einer zweiten Kommunikationseinheit bereitgestellt werden.

Die Schnittstelleneinheit ist zweckmäßigerweise so ausgebildet, dass sie das Resultat von, durch wenigstens ein Statusinformationsverarbeitungsmodul, verarbeiteten Testdaten selbstständig auswertet.

Die Kommunikationseinheit weist zweckmäßigerweise bzw. alternativ vorzugsweise zumindest eine Signalverarbeitungseinheit auf, welche insbesondere ein Testmodul zusätzlich oder alternativ zur Testeinheit des Schnittstellenmoduls erzeugt und/oder bereitstellt.

Die Kommunikationseinheit weist bevorzugt zusätzlich zumindest ein zweites, redundantes Statusinformationsverarbeitungsmodul auf, welches im Wesentlichen entsprechend dem ersten Statusverarbeitungsmodul ausgebildet ist und ebenfalls im Wesentlichen in gleicher Weise an die Schnittstelleneinheit angeschlossen ist.

Die Kommunikationseinheit ist vorzugsweise Teil eines Kommunikationssystems und mit wenigstens einer zweiten Kommunikationseinheit verbunden, wobei die Schnittstelleneinheit der ersten Kommunikationseinheit so ausgebildet ist, dass sie an die zweite Kommunikationseinheit das Kurzstatusdatum des ersten und/oder des zweiten Statusinformationsverarbeitungsmoduls und/oder ein aus einem oder beiden dieser Daten abgeleitetes Gesamtkurzstatusdatum übertragen kann. Die Schnittstelleneinheit der ersten Kommunikationseinheit ist insbesondere so ausgebildet, dass sie ein von der zweiten Kommunikationseinheit empfangenes Teststatusdatum direkt oder in abgewandelter Form in die Statusspeichereinheit des ersten und/oder zweiten Statusinformationsverarbeitungsmoduls schreibt oder ein dort hinterlegtes Statusdatum entsprechend bzw. in Abhängigkeit von Testdaten ändert und anschließend wenigstens eines der daraus resultierenden Kurzstatusdaten und/oder ein daraus abgeleitetes Gesamtkurzstatusdatum an die zweite Kommunikationseinheit überträgt.

Mit dem Ausdruck "der/die Kommunikationseinheit" selber, also ohne Nummerierung ist zweckmäßigerweise stets die erste Kommunikationseinheit gemeint, welche als Sensor- und/oder Aktoreinheit ausgelegt ist.

Die Statusspeichereinheiten des ersten und des zweiten Statusinformationsverarbeitungsmoduls sind zweckmäßigerweise so angeschlossen und/oder werden so angesteuert, dass die jeweiligen Statusdaten dieser beiden Statusspeichereinheiten zumindest bezogen auf Statusinformationen, welche die Kommunikationseinheit selbst bereitstellt, als zueinander invertierte Datenworte ausgebildet sind. Insbesondere sind die Maskierungsspeichereinheiten des ersten und des zweiten Statusinformationsverarbeitungsmoduls so angeschlossen und/oder werden so angesteuert, dass die jeweiligen Bit-Masken dieser beiden Maskierungsspeichereinheiten als zueinander invertierte Datenworte ausgebildet sind.

Vorzugsweise ist das Kommunikationssystem mit mindestens der ersten und der zweiten Kommunikationseinheit so ausgebildet, dass die erste Kommunikationseinheit eine Zählerspeichereinheit aufweist, in welcher ein Zählerwert hinterlegt ist, wobei die erste Kommunikationseinheit so ausgebildet ist, dass zumindest beim Auftreten eines ersten definierten Kommunikationsereignisses der Zählerwert der Zählerspeichereinheit in wenigstens einer definierten ersten Weise geändert wird, wobei mindestens nach Auftreten eines definierten Referenzereignisses der Zählerwert der Zählerspeichereinheit in wenigstens einer definierten zweiten Weise geändert wird, wobei zumindest im Zuge eines zweiten definierten Kommunikationsereignisses, die erste Kommunikationseinheit den aktuellen Zählerwert der Zählerspeichereinheit direkt oder indirekt an die zweite Kommunikationseinheit überträgt.

Das Kommunikationssystem sowie das Verfahren sind insbesondere zur Erhöhung der Betriebssicherheit in einem elektronischen System ausgelegt.

Unter dem Begriff betriebssicher wird bevorzugt der Begriff "fail-safe" und/oder "fail-silent" verstanden.

Unter der Beschreibung beim Auftreten, wird vorzugsweise nach dem Auftreten verstanden.

Das erste und das zweite Kommunikationsereignis sind bevorzugt definiert als ein Kommunikationsereignis, welches zumindest in der Kommunikation zwischen der ersten und der zweiten Kommunikationseinheit auftritt bzw. auftreten kann. Die Zählerspeichereinheit ist bevorzugt so ausgelegt und/oder wird bevorzugt so angesteuert, dass die Änderung des Zählerwerts gemäß der definierten ersten Weise um ein eine definierte Schrittweite mittels einer mathematischen Operation erfolgt. Unter der mathematischen Operation wird insbesondere eine Addition oder Multiplikation oder eine komplexere Operation verstanden und unter der Schrittweite beispielsweise der Wert um den der Zählerwert inkrementiert oder dekrementiert wird, besonders bevorzugt um den Wert eins oder der Wert, welcher mit dem Zählerwert multipliziert wird.

Die Zählerspeichereinheit ist vorzugsweise so ausgelegt und/oder wird so angesteuert, dass bei jedem Kommunikationsereignis zwischen Kommunikationseinheiten des Kommunikationssystems, wie beispielsweise der ersten und der zweiten Kommunikationseinheit, der Zählerwert der Zählerspeichereinheit in der definierten ersten Weise geändert wird. Besonders bevorzugt ist das erste Kommunikationsereignis so definiert, dass jedes Kommunikationsereignis zwischen Kommunikationseinheiten des Kommunikationssystems zumindest als definiertes erstes Kommunikationsereignis behandelt wird.

Es ist bevorzugt, dass die Zählerspeichereinheit als Zählereinheit ausgelegt ist und/oder angesteuert wird, wobei die Änderung des Zählerwerts gemäß der definierten zweiten Weise als Resetvorgang bzw. Rücksetzvorgang der Zählereinheit ausgeprägt ist. Bei diesem Reset- bzw. Rücksetzvorgang wird der Zählerwert insbesondere auf einen definierten Wert, besonders bevorzugt den Wert "0", zurückgesetzt.

Die erste Kommunikationseinheit weist bevorzugt mindestens eine erste und eine zweite Datenspeichereinheit auf und ist so ausgebildet, dass zumindest beim Auftreten des ersten definierten Kommunikationsereignisses das aktuelle Datum der ersten Datenspeichereinheit in die zweite Datenspeichereinheit geschrieben wird und der Zählerwert der Zählerspeichereinheit gemäß der definierten ersten Weise geändert wird. Dies entspricht beispielhaft der Ausprägung für einen Sonderbetriebsmodus, welcher als kontinuierlicher Betriebsmodus bzw. "continuous mode" bezeichnet wird und bei dem der Zählerwert der Zählerspeichereinheit besonders bevorzugt nicht zurückgesetzt wird.

Alternativ vorzugsweise weist die erste Kommunikationseinheit mindestens eine erste und eine zweite Datenspeichereinheit auf und ist so ausgebildet, dass nach dem Auftreten eines definierten Triggerereignisses, insbesondere eines definierten dritten Kommunikationsereignisses oder eines internen Triggerereignisses, das aktuelle Datum der ersten Datenspeichereinheit in die zweite Datenspeichereinheit geschrieben wird und, besonderes bevorzugt wonach, der Zählerwert der Zählerspeichereinheit gemäß der definierten zweiten Weise geändert wird. Ganz besonders bevorzugt werden nach dem Schreiben des aktuellen Datums der ersten Datenspeichereinheit in die zweite Datenspeichereinheit die dann gespeicherten Daten der ersten und zweiten Datenspeichereinheit in einer Transfereinheit verglichen. Das Vergleichsergebnis dieses Vergleichs wird als Statusinformation weiterverwertet.

Es ist bevorzugt, dass die erste Kommunikationseinheit so ausgelegt ist, dass im Zuge zumindest des zweiten definierten Kommunikationsereignisses zwischen wenigstens erster und zweiter Kommunikationseinheit, das aktuelle Datum der zweiten Datenspeichereinheit von der ersten Kommunikationseinheit an die zweite Kommunikationseinheit übertragen wird.

Es ist zweckmäßig, dass die zweite Kommunikationseinheit als Mastereinheit und wenigstens die erste Kommunikationseinheit als Slaveeinheit ausgebildet sind und miteinander durch ein Bussystem verbunden sind.

Die erste Kommunikationseinheit ist vorzugsweise als Sensoreinheit und/oder Aktoreinheit ausgebildet, welche insbesondere wenigstens eine Messgröße erfasst und wenigstens ein Messgrößendatum bereitstellt.

Die zweite Kommunikationseinheit ist bevorzugt als elektronische Kontrolleinheit ausgebildet, insbesondere als elektronische Kontrolleinheit eines Kraftfahrzeugbremssystems und/oder eines Kraftfahrzeugfahrdynamikregelungssystems.

Die zweite Kommunikationseinheit weist zweckmäßigerweise ebenfalls zumindest ein Statusinformationsverarbeitungsmodul sowie eine Schnittstelleneinheit auf und stellt entsprechende Kurzstatusdaten bzw. Gesamtkurzstatusdaten für die erste Kommunikationseinheit bereit.

Es ist bevorzugt, dass die Zählerspeichereinheit so ausgebildet und angesteuert wird, dass der Zählerwert als ein Zeitstempel einsetzbar ausgebildet ist und/oder dass der Zählerwert ein Zeitmaß zur Synchronisation des Kommunikationssystems bildet bzw. liefert.

Das Referenzereignis ist bevorzugt definiert, als der, insbesondere erfolgreiche, Schreibvorgang des Datums der ersten Datenspeichereinheit in die zweite Datenspeichereinheit.

Das dritte definierte Kommunikationsereignis ist vorzugsweise definiert als Daten-Abfrage bzw. "Sample-Befehl" der zweiten Kommunikationseinheit zumindest an die erste Kommunikationseinheit, insbesondere an sämtliche weitere Kommunikationseinheiten des Kommunikationssystems.

Das interne Triggerereignis ist bevorzugt definiert als das Über- oder Unterschreiten eines Messwerts oder Parameters in der ersten Kommunikationseinheit.

Das zweite definierte Kommunikationsereignis umfasst zweckmäßigerweise einen Datenzugriff der zweiten Kommunikationseinheit zumindest auf die erste Kommunikationseinheit, bei welchem der aktuelle Zählerwert sowie das aktuell in der zweiten Datenspeichereinheit hinterlegte Datum, insbesondere gemeinsam, von der ersten Kommunikationseinheit an die zweite Kommunikationseinheit übertragen bzw. gesendet werden. Das Verfahren zur Übertragung von Statusinformationen wird vorzugsweise weiterentwickelt, indem das wenigstens eine Kurzstatusdatum über eine Schnittstelleneinheit an die zweite Kommunikationseinheit übertragen wird. Danach ist es besonders bevorzugt, dass die zweite Kommunikationseinheit das Kurzstatusdatum interpretiert, ob das Kurzstatusdatum eine Information enthält, dass die zweite Kommunikationseinheit hierauf reagieren soll, wonach im Fall, dass das Vorliegen einer solchen Information, auf welche die zweite Kommunikationseinheit reagieren soll, erkannt wird, die zweite Kommunikationseinheit wenigstens das Statusdatum des ersten und/oder des zweiten Statusinformationsverarbeitungsmoduls anfordert oder ausliest und/oder die zweite Kommunikationseinheit sich selbständig in einen anderen Betriebsmodus, insbesondere in einen Notbetriebsmodus, versetzt. Die zweite Kommunikationseinheit ist ganz besonders bevorzugt so ausgebildet, dass in ihr Informationen zur Interpretation des wenigstens einen Kurzstatusdatums und/oder des Gesamtkurzstatusdatums hinterlegt sind.

Außerdem wird das Verfahren zweckmäßigerweise weiterentwickelt, indem zur Synchronisation der Kommunikation zwischen der ersten und der zweiten Kommunikationseinheit die erste Kommunikationseinheit eine Zählerspeichereinheit aufweist, in welcher ein Zählerwert hinterlegt ist, wobei beim Auftreten eines ersten definierten Kommunikationsereignisses der Zählerwert der Zählerspeichereinheit in wenigstens einer definierten ersten Weise geändert wird und wobei beim Auftreten eines definierten Referenzereignisses der Zählerwert der Zählerspeichereinheit in wenigstens einer definierten zweiten Weise geändert wird, wobei zumindest im Zuge eines zweiten definierten Kommunikationsereignisses die erste Kommunikationseinheit wenigstens den aktuellen Zählerwert der Zählerspeichereinheit direkt oder indirekt an die zweite Kommunikationseinheit überträgt.

Das Verfahren zur Synchronisation der Kommunikation wird zweckmäßigerweise weitergebildet, indem die erste Kommunikationseinheit mindestens eine erste und eine zweite Datenspeichereinheit aufweist, wobei nach dem Auftreten eines definierten Triggerereignisses, insbesondere eines definierten dritten Kommunikationsereignisses oder eines internen Triggerereignisses, das aktuelle Datum der ersten Datenspeichereinheit in die zweite Datenspeichereinheit geschrieben wird und der Zählerwert der Zählerspeichereinheit gemäß der definierten zweiten Weise geändert wird und wobei nach dem Auftreten des definierten zweiten Kommunikationsereignisses, das aktuelle Datum der zweiten Datenspeichereinheit zumindest von der ersten Kommunikationseinheit an die zweite Kommunikationseinheit übertragen bzw. gesendet wird.

Die Erfindung bezieht sich außerdem auf die Verwendung der Kommunikationseinheit bzw. des Kommunikationssystems in Kraftfahrzeugen, insbesondere in einem Kraftfahrzeugbremssystem und/oder in einem Kraftfahrzeugfahrdynamikregelungssystem.

Weitere bevorzugte Ausführungsformen ergeben sich aus den Unteransprüchen und der nachfolgenden Beschreibung eines Ausführungsbeispiels an Hand von Figuren.

Es zeigen in schematischer Darstellung
- Fig. 1: ein Ausführungsbeispiel eines Kommunikationssystems mit einer ersten und einer zweiten Kommunikationseinheit, wobei die erste Kommunikationseinheit als Sensoreinheit ausgebildet ist und eine Zählerspeichereinheit umfasst, und
- Fig. 2: die beispielhafte Ausbildung eines ersten und eines zweiten Statusinformationsverarbeitungsmoduls und deren Anbindung an eine Schnittstelleneinheit.

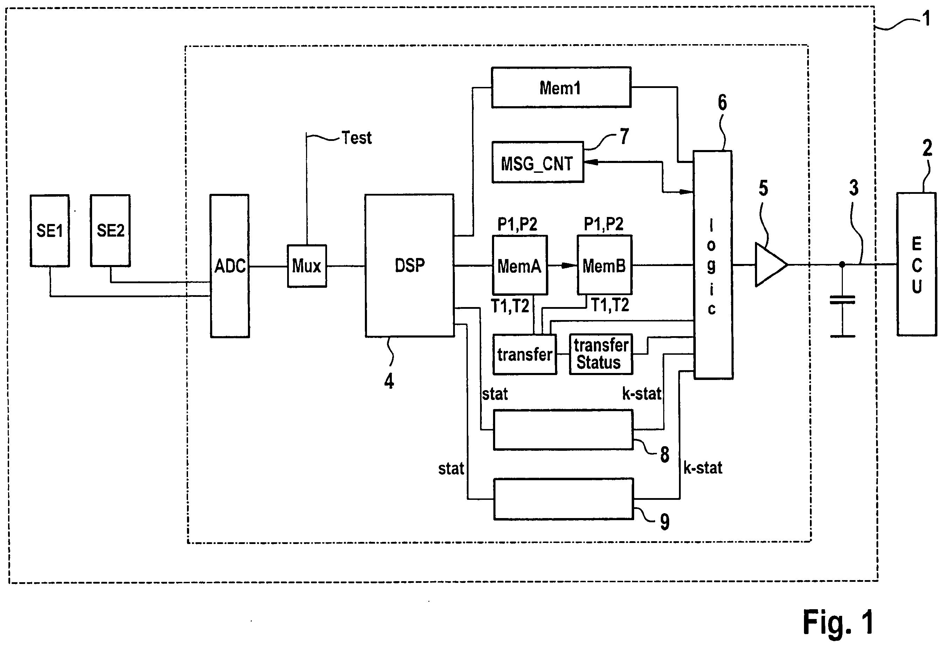

Fig. 1 zeigt ein beispielhaftes betriebssicheres Kommunikationssystem, umfassend eine erste Kommunikationseinheit 1, beispielhaft als Drucksensoreinheit ausgebildet, welche mittels Datenübertragungsstrecke 3 mit einer zweiten Kommunikationseinheit 2, die als elektronischen Kontrolleinheit ECU ausgebildet ist, verbunden ist. Sensoreinheit 1 weist dabei zwei Messwertfühler SE1, SE2, beispielgemäß zwei Drucksensorelemente, auf. Diese sind mit einem Analog-/Digitalwandler ADC verbunden, welcher beispielsweise zwei digitale Druckwerte P1, P2 und zwei digitale Temperaturwerte T1, T2 pro Messung bereitstellt. Dieser Analog-/Digitalwandler ADC ist mittels eines Multiplexers Mux mit einer Signalverarbeitungseinheit 4, beispielsweise als digitaler Signalprozessor DSP ausgebildet, verbunden. Außerdem wird mittels des Multiplexers Mux noch wenigstens eine weitere Signalleitung, beispielsweise Testsignalleitungen Test, der Signalverarbeitungseinheit 4 zugeführt. Für die Hauptinformationen bzw. Druckinformationen P1, P2, welche die Sensoreinheit 1 an die Kontrolleinheit 2 liefern soll, weist Sensoreinheit 1 zur Synchronisation eine erste und eine zweite, serielle Datenspeichereinheit MemA und MemB auf. Dabei werden bezüglich jedes Mess-/Auswertevorgangs bzw. -zyklus die Hauptinformationen, beispielsweise zwei digitale Druckwerte P1, P2 und zwei digitale Temperaturwerte T1, T2 in die als Pufferspeicher/Zwischenspeicher genutzte erste Datenspeichereinheit MemA geschrieben. Erste Datenspeichereinheit MemA wird dabei stets überschrieben. Signalverarbeitungseinheit 4 schreibt beispielgemäß selbstständig bei Vorliegen neuer Daten in die erste Datenspeichereinheit MemA.

Sensoreinheit 1 weist eine Zählerspeichereinheit 7 auf, in welcher ein Zählerwert (message counter) MSG_CNT hinterlegt ist, welcher einem Zeitstempel bzw. Zeitmaß für eine synchrone Kommunikation innerhalb des Kommunikationssystems entspricht. Zumindest bei einem ersten Kommunikationsereignis, beispielgemäß bei jedem Kommunikationsereignis zwischen erster und zweiter Kommunikationseinheit, wird der Zählerwert in einer definierten ersten Weise geändert. Dies geschieht beispielgemäß durch Ansteuerung seitens der Schnittstelleneinheit logic, 6. Zählerspeichereinheit 7 ist als Zählereinheit ausgebildet und die Ansteuerung gemäß der ersten Weise ist beispielgemäß als Inkrementieren des Zählerwerts um 1 definiert.

Eine Daten-Abfrage bzw. ein "Sample-Befehl" der zweiten Kommunikationseinheit 2, ECU, welcher beispielgemäß als drittes Kommunikationsereignis definiert ist, wird seitens der Sensoreinheit 1 als Triggerereignis interpretiert, wonach die Sensoreinheit 1 das aktuelle Datum der ersten Datenspeichereinheit MemA in die zweite Datenspeichereinheit MemB überträgt bzw. schreibt. Ein solcher, erfolgreicher Schreibvorgang von MemA nach MemB nach dem Triggerereignis ist als Referenzereignis definiert, nach dessen Auftreten der Zählerwert der Zählerspeichereinheit 7 bzw. Zählereinheit in definierter zweiter Weise geändert wird, was beispielhaft einem "Reset" bzw. einem Zurücksetzen des Zählerwerts auf den Wert "0" entspricht. Hierdurch ist der Abfragevorgang der zweiten Kommunikationseinheit ECU zur Synchronisation mit dem Reset des Zählerwerts verknüpft. Anschließend erfolgt beispielsweise ein Datenzugriff bzw. Lesebefehl der zweiten Kommunikationseinheit, welcher als zweites Kommunikationsereignis definiert ist. Es erfolgt darauf eine Übertragung des aktuell in der zweiten Datenspeichereinheit MemB hinterlegten Datums sowie des aktuellen Zählerwerts von der Sensoreinheit 1 an die Kontrolleinheit ECU, 2. Diese Übertragung erfolgt durch die Schnittstelleneinheit logic, 6 und beispielgemäß der dieser nachgeschalteten Treibereinheit 5.

Die Kontrolleinheit 2 triggert also die Datenübertragung mit dem dritten Kommunikationsereignis, um jeweils zum exakten Anforderungszeitpunkt die aktuellen Daten auszuwählen - aktuelles Datum des ersten Datenspeichers MemA wird in zweiten Datenspeicher MemB geschrieben. Dieses Datum aus MemB wird dann nach einem, als zweites Kommunikationsereignis definierten Datenzugriff der ECU, gemeinsam mit dem aktuellen Zählerwert über die Schnittstelleneinheit 6, logic der Treibereinheit 5 bereitgestellt, welche diese Daten über die Datenübertragungsstrecke 3 an Kontrolleinheit 2 überträgt.

Signalverarbeitungseinheit 4 stellt darüber hinaus Statusinformationen stat bereit, welche einem ersten und einem redundanten zweiten Statusinformationsverarbeitungsmodul 8 und 9 zugeführt werden, die mit der Schnittstelleneinheit logic, 6 verbunden sind. Diese beiden Statusinformationsverarbeitungsmodule 8, 9 ermöglichen eine effiziente bzw. ressourcensparende Übertragung von Statusinformationen von der Sensoreinheit 1 zur Kontrolleinheit 2.

Sensoreinheit 1 weist zusätzlich eine Zentral-Speichereinheit Mem1 auf, welche beispielgemäß als EEPROM-Einheit ausgebildet ist und in welcher definierte Betriebsparameter der Sensoreinheit hinterlegt sind. Diese Zentral-Speichereinheit Mem1 ist ebenfalls mit der Signalverarbeitungseinheit 4 und der Schnittstelleneinheit logic verbunden.

Die Speichereinheit MemA und MemB umfassen beispielgemäß jeweils ein Register für jedes Hauptinformationsdatum P1, P2, T1 und T2.

Die Zentral-Speichereinheit Mem1 umfasst optional eine Hardware-Identifikationsinformation ID, welche die Kontrolleinheit ECU abfragen kann, und mittels welcher Sensoreinheit 1 eindeutig identifiziert werden kann. Hierdurch kann beispielsweise der Einsatz einer nicht vorgesehenen Sensoreinheit im Zusammenspiel mit einer bestimmten Kontrolleinheit vermieden werden.

Zur weiteren Erhöhung der Betriebssicherheit ist es optional vorgesehen, dass die Kontrolleinheit ECU die durch die Drucksensorelemente SE1 und SE2 erfassten und durch die Signalverarbeitungseinheit 4 bereit gestellten Druckwerte P1 und P2 zur Plausibilisierung vergleicht. Es ist nicht auszuschließen, dass der Analog-/Digitalwandler ADC und/oder die Signalverarbeitungseinheit 4 die Drucksignale in ähnlicher, unerwünschter Weise beeinflusst. Deshalb werden die Druckwerte P1 und P2 beispielgemäß in unterschiedlicher Weise repräsentiert bzw. codiert, beispielweise als zueinander invertiert codierte Daten oder durch eine relativen Offset, welcher der Kontrolleinheit 2 bekannt ist.

Darüber hinaus wird zu definierten Zeiten, beispielsweise in einem Testmodus der Sensoreinheit 1, an Testsignalleitungen Test ein oder mehrere Testdaten bereitgestellt, durch welche die Kontrolleinheit 2 prüfen kann, ob beispielsweise Filterparameter oder andere Signalverarbeitungsfunktionen der Signalverarbeitungseinheit 4 korrekt funktionieren. Beispielgemäß gibt die Kontrolleinheit 2 diese Testwerte jeweils zur Laufzeit vor oder initialisiert einen komplett in der Sensoreinheit 1 implementierten BIST (build in self test) mit entsprechend hinterlegten Testvektoren bzw. Testdaten, wobei diese bzw. die diesen zugeordneten Ausgangsdaten der Kontrolleinheit 2 bekannt sind.

Um optional zusätzlich eine fehlerhafte Select-/Auswahlleitung bzw. deren Funktion des Multiplexers Mux erkennen zu können, werden die Druckwerte P1 und P2, insbesondere direkt im Anschluss nach der Verarbeitung von Testdaten, in der Kontrolleinheit 2 plausibilisiert, beispielsweise mittels eines Druckmodells oder mittels bestimmter Schwellwerte/Differenzwertschwellen. Diese Plausibilisierung zumindest der Druckwerte P 1 und P2 kann beispielhaft auf einer "Bremssystemebene" durchgeführt werden, wenn das hier beschriebene Kommunikationssystem Teil eines Kraftfahrzeugbremssystems ist und die Sensoreinheit 1 dabei Bremsdruckwerte erfasst und die Kontrolleinheit 2 als die elektronische Kontrolleinheit des Bremssystems ausgebildet ist.

Die Zeitbasis des Zeitstempels bzw. der jeweils aktuelle Zählerwert ist sowohl der Sensoreinheit 1 also auch der Kontrolleinheit ECU bekannt. Dieser Zeitstempel ermöglicht die Erkennung möglicher Sample-/Timing- und/oder Synchronisationsfehler, insbesondere hinsichtlich der Datenübertragung über Datenübertragungsstrecke 3.

Datenübertragungsstrecke 3 umfasst beispielhaft lediglich eine einzige Datenübertragungsleitung.

Den Datenspeichereinheiten MemA, MemB ist optional beispielhaft eine Transfereinheit transfer zugeordnet, welche eine Logikschaltung umfasst, mit welcher die Daten des Speicher MemA direkt vor der Übertragung der Daten des Pufferspeichers MemA in den Speicher MemB mit den Daten des Speichers MemB direkt nach eben dieser Übertragung verglichen werden. Das Ergebnis wird in ein Statusregister transfer Status geschrieben. Außerdem weist die Transfereinheit transfer eine Testlogikschaltung auf, mit welcher die Logikschaltung getestet wird. Die Übertragung der Daten von MemA nach MemB und/oder die Transfereinheit werden beispielgemäß zusätzlich durch die Übertragung von Testdaten von MemA nach MemB überprüft.

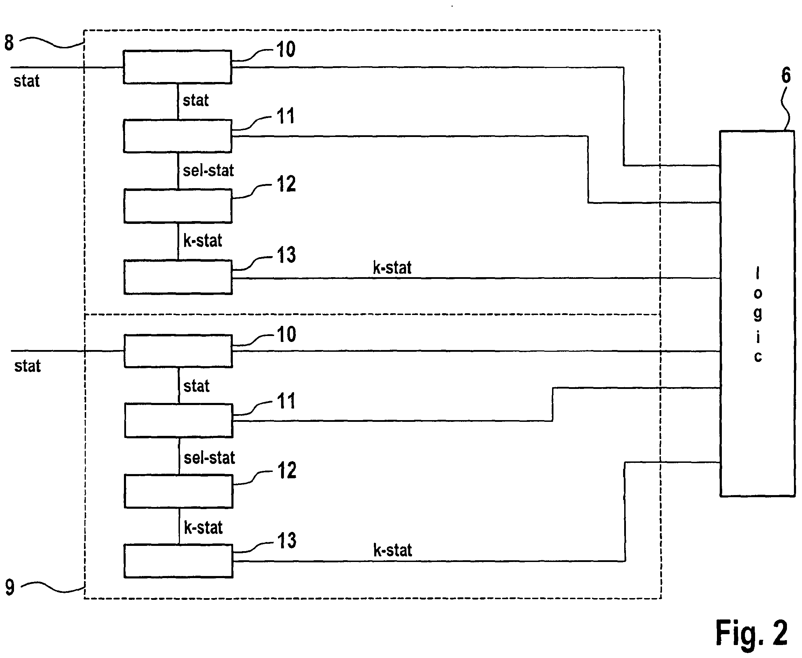

Anhand von Fig. 2 wird der Aufbau und die Ansteuerung der redundanten Statusinformationsverarbeitungsmodule 8 und 9 der Sensoreinheit veranschaulicht. Diese umfassen jeweils eine Statusspeichereinheit 10, eine Maskierungsspeichereinheit 11, ein Statusverarbeitungselement 12 sowie beispielgemäß eine Kurzstatusspeichereinheit 13, welche alternativ beispielhaft jeweils oder gemeinsam in der Schnittstelleneinheit 6, logic integriert ist/sind. Der Statusspeichereinheit 10 wird jeweils ein Statusdatum stat zugeführt, beispielgemäß von der hier nicht dargestellten Signalverarbeitungseinheit 4, und in den Statusspeichereinheiten 10 gespeichert. Diese stellen das Statusdatum stat jeweils der Maskierungsspeichereinheit 11 bereit, in welcher eine Bit-Maske hinterlegt ist und in welcher das Statusdatum stat mit der jeweiligen Bit-Maske UND-verknüpft wird, wodurch die Bit-Maske definierte Statusbits bzw. Statusinformationen selektiert. Dafür weist die Maskierungsspeichereinheit 11 jeweils eine nicht dargestellte Logikschaltung bzw. eine Selektionsschaltung auf. Diese Logikschaltung bzw. Selektionsschaltung umfasst insbesondere eine UND-Logik-Schaltung, welche beispielgemäß so ausgelegt ist, dass jedes Bit des Statusdatums mit jeweils einem Bit der Bit-Maske UND-verknüpft werden.

Das daraus resultierende Selektiv-Statusdatum sel-stat wird in Statusverarbeitungselement 12 verarbeitet, so dass ein Kurzstatusdatum k-stat bereitgestellt wird, das eine kürzere Datenwortlänge aufweist als das Selektiv-Statusdatum sel-stat. Beispielgemäß ist das Statusverarbeitungselement 12 so ausgebildet, dass es die einzelnen Bits des Selektiv-Statusdatums sel-stat ODER-verknüpft. Das Kurzstatusdatum k-stat wird in Kurzstatusspeichereinheit 13 gespeichert und der Schnittstelleneinheit 6 bereitgestellt. Das Kurzstatusdatum k-stat umfasst beispielgemäß aufgrund der beispielhaften ODER-Verknüpfung der einzelnen Bits des Selektiv-Statusdatums nur ein Bit, welches eine Information darüber enthält, ob eines oder mehrere, also ob mindestens eines der Statusbits, welche durch die Maskierungsspeichereinheit selektiert werden, den Wert "1" hat. Das Kurzstatusdatum k-stat jedes Statusinformationsverarbeitungsmoduls 8, 9 oder ein gemeinsames Gesamtkurzstatusdatum wird an die hier nicht dargestellte zweite Kommunikationseinheit gesendet. Identifiziert diese das Auftreten eines Fehlers bzw. eines unerwünschten Status, dann liest Schnittstelleneinheit 6 eines oder beide der Statusspeichereinheiten aus und sendet das jeweilige komplette Statusdatum an die zweite Kommunikationseinheit. Die Schnittstelleneinheit 6 ist so ausgelegt und mit der Maskierungsspeichereinheit 12 verbunden, dass ein Lese- und ein Schreibzugriff möglich sind. Durch den Schreibzugriff bzw. das Ändern bzw. schreiben der Bit-Maske kann die Auswahl der einzelnen Statusbits des Statusdatum vorgegeben werden.

Die Schnittstelleneinheit 6 weist beispielhaft eine nicht dargestellte Testeinheit auf, welche so ausgebildet ist, dass sie selbstständig Testdaten bereitstellt oder Testdaten weiterleitet und/oder verarbeitet, besonders bevorzugt Testdaten, die von einer zweiten Kommunikationseinheit bereitgestellt werden. Diese Testdaten werden von der Schnittstelleneinheit jeweils in die Statusspeichereinheit der Statusinformationsverarbeitungsmodule 8, 9 geschrieben und das Ergebnis hinsichtlich des zu erwartenden Ergebnisses beurteilt. So kann die Funktionsweise der Statusinformationsverarbeitungsmodule 8, 9 getestet werden.

Alternativ beispielhaft weisen die Statusinformationsverarbeitungsmodule 8, 9 keine Kurzstatusspeichereinheiten auf, sondern das jeweilige Kurzstatusdaten k-stat wird der Schnittstelleneinheit bereitgestellt, welche so ausgebildet ist, dass sie diese beiden Kurzstatusdaten k-stat ODER-verknüpft und ein so aus diesen abgeleitetes Gesamtkurzstatusdatum erzeugt, welches beispielhaft an die zweite Kommunikationseinheit übertragen wird.

## Patentansprüche

1. Elektronische Kommunikationseinheit (1), die als Sensor- und/oder Aktoreinheit ausgebildet ist, umfassend zumindest ein erstes Statusinformationsverarbeitungsmodul (8), welches eine Statusspeichereinheit (10) aufweist, in welcher Statusinformationen dieser Kommunikationseinheit (1) in Form eines Statusdatums (stat) hinterlegt sind, wobei das erste Statusinformationsverarbeitungsmodul (8) außerdem eine mit der Statusspeichereinheit (10) verbundene Maskierungsspeichereinheit (11) sowie ein mit dieser Maskierungsspeichereinheit (11) verbundenes Statusverarbeitungselement (12) umfasst, wobei das erste Statusinformationsverarbeitungsmodul (8) so ausgelegt ist, dass wenigstens eine Statusinformation des Statusdatums (stat) durch die Maskierungsspeichereinheit (11) selektiert wird und das resultierende Selektiv-Statusdatum (sel-stat) durch das Statusverarbeitungselement (12) so verarbeitet wird, dass diese ausgangsseitig ein Kurzstatusdatum (k-stat) bereitstellt, wobei die Kommunikationseinheit eine Schnittstelleneinheit (6) umfasst, welche mit dem Ausgang des Statusverarbeitungselements (12) und/oder mit dem Ausgang der Kurzstatusspeichereinheit (13) des ersten Statusinformationsverarbeitungsmoduls (8) verbunden ist, **dadurch gekennzeichnet, dass** das Kurzstatusdatum (k-stat) eine kürzere Datenwortlänge aufweist als das Selektiv-Statusdatum (sel-stat) und die Schnittstelle an die Maskierungsspeichereinheit (11) des ersten Statusinformationsverarbeitungsmoduls so angeschlossen ist, dass sie die in der Maskierungsspeichereinheit (11) hinterlegte Bit-Maske ändern und/oder überschreiben kann, wodurch die Auswahl der Statusarten, über welche der Schnittstelleneinheit (6) Informationen in Form der Kurzstatusdaten (k-stat) bereitgestellt werden, angepasst werden können und wobei die elektronische Kommunikationseinheit als erste Kommunikationseinheit (1) Teil eines Kommunikationssystems ist und mit wenigstens einer zweiten Kommunikationseinheit (2) verbunden ist, wobei die Schnittstelleneinheit (6) der ersten Kommunikationseinheit (1) so ausgebildet ist, dass sie an die zweite Kommunikationseinheit (2) das Kurzstatusdatum (k-stat) des ersten und/oder des zweiten Statusinformationsverarbeitungsmoduls (8, 9) und/oder ein aus einem oder beiden dieser Daten abgeleitetes Gesamtkurzstatusdatum übertragen kann.

2. Kommunikationseinheit nach Anspruch 1, **dadurch gekennzeichnet, dass** das erste Statusinformationsverarbeitungsmodul (8) zusätzlich eine mit dem Statusverarbeitungselement (12) verbundene Kurzstatusspeichereinheit (13) aufweist, in welche das Kurzstatusdatum (k-stat) geschrieben wird.

3. Kommunikationseinheit nach Anspruch 1 oder 2, **dadurch gekennzeichnet, dass** die Schnittstelleneinheit (6) außerdem so an die Statusspeichereinheit (10) des ersten Statusinformationsverarbeitungsmoduls (8) angeschlossen ist, dass sie in diese Statusspeichereinheit (10) schreiben kann, wodurch ein Teststatusdatum in die Statusspeichereinheit (10) geschrieben werden kann.

4. Kommunikationseinheit nach einem der vorhergehenden Ansprüche, **dadurch gekennzeichnet, dass** diese zusätzlich zumindest ein zweites, redundantes, Statusinformationsverarbeitungsmodul (9) aufweist, welches im Wesentlichen entsprechend dem ersten Statusinformationsverarbeitungsmodul (8) ausgebildet ist und ebenfalls im Wesentlichen in gleicher Weise an die Schnittstelleneinheit (6) angeschlossen ist.

5. Kommunikationseinheit nach einem der vorhergehenden Ansprüche, **dadurch gekennzeichnet, dass** die Schnittstelleneinheit (6) der ersten Kommunikationseinheit (1) so ausgebildet ist, dass sie ein von der zweiten Kommunikationseinheit (2) empfangenes Teststatusdatum direkt oder in abgewandelter Form in die Statusspeichereinheit (10) des ersten und/oder zweiten Statusinformationsverarbeitungsmoduls (8, 9) schreibt und anschließend wenigstens eines der daraus resultierenden Kurzstatusdaten (k-stat) und/oder ein daraus abgeleitetes Gesamtkurzstatusdatum an die zweite Kommunikationseinheit (2) überträgt.

6. Kommunikationseinheit nach mindestens einem der Ansprüche 4 oder 5, **dadurch gekennzeichnet, dass** die Statusspeichereinheiten (10) des ersten und des zweiten Statusinformationsverarbeitungsmoduls (8, 9) so angeschlossen sind und/oder angesteuert werden, dass die jeweiligen Statusdaten (stat) dieser beiden Statusspeichereinheiten zumindest bezogen auf Statusinformationen, welche die Kommunikationseinheit (1) selbst bereitstellt, als zueinander invertierte Datenworte ausgebildet ist.

7. Verfahren zur Übertragung von Statusinformationen von einer ersten Kommunikationseinheit (1), die als Sensor- und/oder Aktoreinheit ausgebildet ist, an wenigstens eine zweite Kommunikationseinheit (2), wobei die erste Kommunikationseinheit zumindest ein erstes Statusinformationsverarbeitungsmodul (8) mit einer Statusspeichereinheit (10) aufweist, in welcher Statusinformationen dieser Kommunikationseinheit (1) in Form eines Statusdatums (stat) hinterlegt sind und wenigstens eine Statusinformation dieses Statusdatums (stat) des ersten Statusinformationsverarbeitungsmoduls (8) mittels einer Maskierungsspeichereinheit (11) selektiert wird wonach das resultierende Selektiv-Statusdatum (sel-stat) durch ein Statusverarbeitungselement (12) verarbeitet wird und dieses Statusverarbeitungselement ein Kurzstatusdatum (k-stat) bereitstellt, **dadurch gekennzeichnet, dass** das Kurzstatusdatum (k-stat) eine kürzere Datenwortlänge aufweist als das Selektiv-Statusdatum (sel-stat) und die erste Kommunikationseinheit (1) nach mindestens einem der Ansprüche 1 bis 6 ausgebildet ist.

8. Verfahren nach Anspruch 7, **dadurch gekennzeichnet, dass** das wenigstens eine Kurzstatusdatum (k-stat) über eine Schnittstelleneinheit (6) an die zweite Kommunikationseinheit (2) übertragen wird.

9. Verfahren nach Anspruch 8, **dadurch gekennzeichnet, dass** die zweite Kommunikationseinheit (2) das Kurzstatusdatum (k-stat) interpretiert, ob das Kurzstatusdatum eine Information enthält, dass die zweite Kommunikationseinheit (2) hierauf reagieren soll, wonach im Fall, dass das Vorliegen einer solchen Information, auf welche die zweite Kommunikationseinheit (2) reagieren soll, erkannt wird, die zweite Kommunikationseinheit (2) wenigstens das Statusdatum (stat) des ersten und/oder des zweiten Statusinformationsverarbeitungsmoduls (8, 9) anfordert oder ausliest und/oder die zweite Kommunikationseinheit (2) sich selbständig in einen anderen Betriebsmodus, insbesondere in einen Notbetriebsmodus, versetzt.

10. Verwendung der Kommunikationseinheit gemäß mindestens einem der Ansprüche 1 bis 6 in Kraftfahrzeugen, insbesondere in einem Kraftfahrzeugbremssystem und/oder in einem Kraftfahrzeugfahrdynamikregelungssystem.

## Claims

1. Electronic communication unit (1) which is in the form of a sensor and/or actuator unit, comprising at least a first status information processing module (8) which has a status memory unit (10) which stores status information for said communication unit (1) in the form of a status data item (stat), wherein the first status information processing module (8) furthermore comprises a masking memory unit (11) connected to the status memory unit (10) and also a status processing element (12) connected to said masking memory unit (11), wherein the first status information processing module (8) is designed such that at least one status information item from the status data item (stat) is selected by the masking memory unit (11) and the resultant selective status data item (sel-stat) is processed by the status processing element (12) such that the output of the latter provides a short status data item (k-stat), the communication unit wherein comprises an interface unit (6) which is connected to the output of the status processing element (12) and/or to the output of the short status memory unit (13) of the first status information processing module (8), **characterized in that** the short status data item (k-stat) has a shorter data word length than the selective status data item (sel-stat) and the interface is connected to the masking memory unit (11) of the first status information processing module such that it can change and/or overwrite the bit mask stored in the masking memory unit (11), as a result of which it is possible to customize the selection of the status types about which the interface unit (6) is provided with information in the form of the short status data (k-stat) and wherein the electronic communication unit is part of a communication system as a first communication unit (1) and is connected to at least one second communication unit (2), wherein the interface unit (6) of the first communication unit (1) is designed such that it can transmit to the second communication unit (2) the short status data item (k-stat) in the first and/or the second status information processing module (8, 9) and/or a total short status data item derived from one or both of these data items.

2. Communication unit according to Claim 1, **characterized in that** the first status information processing module (8) additionally has a short status memory unit (13) which is connected to the status processing element (12) and to which the short status data item (k-stat) is written.

3. Communication unit according to Claim 1 or 2, **characterized in that** the interface unit (6) is furthermore connected to the status memory unit (10) of the first status information processing module (8) such that it can write to said status memory unit (10), as a result of which it is possible to write a test status data item to the status memory unit (10)

4. Communication unit according to one of the preceding claims, **characterized in that** it additionally has at least a second, redundant status information processing module (9) which is essentially designed on the basis of the first status information processing module (8) and is likewise connected to the interface unit (6) in essentially the same way.

5. Communication unit according to one of the preceding claims, **characterized in that** the interface unit (6) of the first communication unit (1) is designed such that it writes a test status data item received from the second communication unit (2) directly or in modified form to the status memory unit (10) of the first and/or second status information processing module (8, 9) and then transmits at least one of the resultant short status data items (k-stat) and/or a total short status data item derived therefrom to the second communication unit (2).

6. The communication unit according to at least one of Claims 4 or 5, **characterized in that** the status memory units (10) of the first and second status information processing modules (8, 9) are connected and/or actuated such that the respective status data (stat) from said two status memory units are in the form of mutually inverted data words, at least in relation to status information which the communication unit (1) itself provides.

7. Method for transmitting status information from a first communication unit (1), which is in the form of a sensor and/or actuator unit, to at least one second communication unit (2), wherein the first communication unit has at least a first status information processing module (8) having a status memory unit (10) which stores status information from said communication unit (1) in the form of a status data item (stat), and at least one status information item from said status data item (stat) in the first status information processing module (8) is selected by means of a masking memory unit (11), after which the resultant selective status data item (sel-stat) is processed by a status processing element (12) and said status processing element provides a short status data item (k-stat), **characterized in that** the short status data item (k-stat) has a shorter data word length than the selective status data item (sel-stat) and the first communication unit (1) is formed according to at least one of Claims 1 to 6.

8. Method according to Claim 7, **characterized in that** the at least one short status data item (k-stat) is transmitted to the second communication unit (2) via an interface unit (6).

9. Method according to Claim 8, **characterized in that** the second communication unit (2) interprets the short status data item (k-stat) to determine whether the short status data item contains an information item indicating that the second communication unit (2) needs to react thereto, after which, if the presence of such an information item to which the second communication unit (2) needs to react is identified, the second communication unit (2) requests or reads at least the status data item (stat) in the first and/or the second status information processing module (8, 9) and/or the second communication unit (2) automatically puts itself into another mode of operation, particularly an emergency mode of operation.

10. Use of the communication unit according to at least one of Claims 1 to 6 in motor vehicles, particularly in a motor vehicle braking system and/or in a motor vehicle electronic stability control system.

## Revendications

1. Unité de communication électronique (1) conçue en tant qu'unité à capteurs et/ou à actionneurs, comprenant au moins un premier module de traitement d'informations d'état (8) comportant une unité de stockage d'état (10) dans laquelle des informations d'état de ladite unité de communication (1) sont stockées sous la forme d'une donnée d'état (stat), dans laquelle le premier module de traitement d'informations d'état (8) comprend en outre une unité de stockage de masquage (11) reliée à l'unité de stockage d'état (10) et un élément de traitement d'état (12) relié à ladite unité de stockage de masquage (11), dans laquelle le premier module de traitement d'informations d'état (8) est conçu de manière à ce qu'au moins une information d'état de la donnée d'état (stat) soit sélectionnée par l'unité de stockage de masquage (11) et à ce que la donnée d'état sélective obtenue (sel-stat) soit traitée par l'élément de traitement d'état (12) de manière à ce qu'il fournisse en sortie une donnée d'état courte (k-stat), dans laquelle l'unité de communication comprend une unité d'interface (6) connectée à la sortie de l'élément de traitement d'état (12) et/ou à la sortie de l'unité de stockage d'état court (13) du premier module de traitement d'informations d'état (8), **caractérisée en ce que** la donnée d'état courte (k-stat) a une longueur de mot de données plus courte que la donnée d'état sélective (sel-stat) et **en ce que** l'interface est connectée à l'unité de stockage de masquage (11) du premier module de traitement d'informations d'état de manière à ce qu'elle puisse modifier et/ou écraser le masque binaire stocké dans l'unité de stockage de masquage (11), cela permettant d'adapter la sélection des types d'état par l'intermédiaire desquels des informations sous forme de données d'état courtes (k-stat) sont fournies à l'unité d'interface (6), et dans laquelle l'unité de communication électronique fait partie d'un système de communication en tant que première unité de communication (1) et est reliée à au moins une deuxième unité de communication (2), dans laquelle l'unité d'interface (6) de la première unité de communication (1) est conçue pour transmettre à la deuxième unité de communication (2) la donnée d'état courte (k-stat) du premier et/ou du deuxième module de traitement d'informations d'état (8, 9) et/ou une donnée d'état courte globale dérivée de l'une desdites données ou des deux.

2. Unité de communication selon la revendication 1, **caractérisée en ce que** le premier module de traitement d'informations d'état (8) comprend en outre une unité de stockage d'état court (13) reliée à l'élément de traitement d'état (12) et dans laquelle est écrite la donnée d'état courte (k-stat).

3. Unité de communication selon la revendication 1 ou 2, **caractérisée en ce que** l'unité d'interface (6) est en outre connectée à l'unité de stockage d'état (10) du premier module de traitement d'informations d'état (8) de manière à ce qu'elle puisse effectuer une écriture dans ladite unité de stockage d'état (10), cela permettant d'écrire une donnée d'état de test dans l'unité de stockage d'état (10).

4. Unité de communication selon l'une des revendications précédentes, **caractérisée en ce qu'**elle comprend en outre au moins un deuxième module de traitement d'informations d'état redondant (9) qui est sensiblement réalisé conformément au premier module de traitement d'informations d'état (8) et qui est également connecté sensiblement de la même manière à l'unité d'interface (6).

5. Unité de communication selon l'une des revendications précédentes, **caractérisée en ce que** l'unité d'interface (6) de la première unité de communication (1) est conçue de manière à écrire une donnée d'état de test reçue par la deuxième unité de communication (2) directement ou sous une forme modifiée dans l'unité de stockage d'état (10) du premier et/ou deuxième module de traitement d'informations d'état (8, 9) et transmet ensuite à la deuxième unité de communication (2) au moins l'une des données d'état courtes (k-stat) ainsi obtenues et/ou une donnée d'état courte totale dérivée de celle-ci.

6. Unité de communication selon au moins l'une des revendications 4 ou 5, **caractérisée en ce que** les unités de mémoire d'état (10) des premier et deuxième modules de traitement d'informations d'état (8, 9) sont connectées et/ou commandées de manière à ce que les données d'état respectives (stat) de ces deux unités de mémoire d'état soient réalisées, au moins par rapport aux informations d'état fournies par l'unité de communication (1) elle-même, sous la forme de mots de données mutuellement inversés.

7. Procédé pour transmettre des informations d'état d'une première unité de communication (1), qui est réalisée sous la forme d'une unité à capteurs et/ou à actionneurs, à au moins une deuxième unité de communication (2), dans lequel la première unité de communication comprend au moins un premier module de traitement d'informations d'état (8) comportant une unité de stockage d'état (10) dans laquelle des informations d'état de ladite unité de communication (1) sont stockées sous la forme d'une donnée d'état (stat) et au moins une information d'état de ladite donnée d'état (stat) du premier module de traitement d'informations d'état (8) est sélectionnée au moyen d'une unité de stockage de masquage (11) et après cela, la donnée d'état sélective (sel-stat) obtenue est traitée par un élément de traitement d'état (12) et ledit élément de traitement d'état fournit une donnée d'état courte (k-stat), **caractérisé en ce que** la donnée d'état courte (k-stat) présente une longueur de mot de données plus courte que la donnée d'état sélective (sel-stat) et **en ce que** la première unité de communication (1) est réalisée selon au moins l'une des revendications 1 à 6.

8. Procédé selon la revendication 7, **caractérisé en ce que** ladite au moins une donnée d'état courte (k-stat) est transmise à la deuxième unité de communication (2) par l'intermédiaire d'une unité d'interface (6).

9. Procédé selon la revendication 8, **caractérisé en ce que** la deuxième unité de communication (2) interprète la donnée d'état courte (k-stat) pour déterminer si la donnée d'état courte contient une information, **en ce que** la deuxième unité de communication (2) doit réagir à celle-ci, et après cela, dans le cas où la présence d'une information à laquelle la deuxième unité de communication (2) doit réagir est détectée, la deuxième unité de communication (2) demande ou lit au moins la donnée d'état (stat) du premier et/ou du deuxième module de traitement d'informations d'état (8, 9) et/ou la deuxième unité de communication (2) bascule automatiquement dans un autre mode de fonctionnement, en particulier dans un mode de fonctionnement d'urgence.

10. Utilisation de l'unité de communication selon au moins l'une des revendications 1 à 6 dans des véhicules automobiles, en particulier dans un système de freinage de véhicule automobile et/ou dans un système de régulation de dynamique de véhicule.
